# EUROPÄISCHE PATENTSCHRIFT

(11) **EP 4 240 979 B1**
(45) Veröffentlichungstag und Bekanntmachung des Hinweises auf die Patenterteilung: **02.10.2024**
(21) Anmeldenummer: 21809917.4
(22) Anmeldetag: 13.10.2021
(51) Int. Cl.: F16B 7/18

(54) **PROFILKOPPLUNGSANORDNUNG**
PROFILED COUPLING ASSEMBLY
ENSEMBLE DE COUPLAGE PROFILÉ

(30) Priorität: 06.11.2020 DE 202020004684 U
(43) Veröffentlichungstag der Anmeldung: 13.09.2023
(73) Patentinhaber: isel-automation GmbH & Co. KG, 36466 Dermbach (DE)
(72) Erfinder: ISERT, Hugo, 36132 Eiterfeld (DE)
(74) Vertreter: Weihrauch, Frank
(86) Internationale Anmeldenummer: PCT/DE2021/000170
(87) Internationale Veröffentlichungsnummer: WO 2022/096046

(56) Entgegenhaltungen:
- DE-A1- 102007 010 118

## Beschreibung

Die Erfindung betrifft eine Profilkopplungsanordnung.

Der Stand der Technik beschreibt Profilkopplungsanordnungen mit Profilverbindungen in verschiedenen Ausführungen. Der Zweck der Profilverbindungen ist es, mindestens ein Profilteil mit einem Bauteil oder mindestens zwei Profilteile miteinander zu verbinden. DE 10 2007 010118 A1 offenbart eine Verbindung von Profilstäben.

Die Profilteile bestehen vorzugsweise aus Aluminium und werden häufig in baukastenartigen Standards bereitgestellt. Hier sind verschiedene Abmaße und Formen verfügbar. Die Querschnitte der Profile reichen von rechteckig über quadratisch bis hin zu runden Geometrien. Ein übergreifendes Merkmal vieler Profilteile stellt das Vorhandensein mindestens einer Längsnut über die gesamte Profillänge dar. Diese Längsnut ist so profiliert, dass verschiedene Verbindungs- und Kopplungselemente darin angeordnet werden können. Dazu besitzt die Längsnut zumeist einen rechteckigen Gang, der durch eine Hinterschneidungsform überkragt wird und so einen T-Querschnitt ausbildet. Die Gegenform dazu bildet der T-Nutenstein als am häufigsten eingesetztes Kopplungselement. Seine T-Form bildet ein korrespondierendes Gegenstück zur Profillängsnut.

Zur Kopplung zweier Profilteile in unterschiedlicher Winkellage zueinander sind Lösungen mit weiteren Kopplungskörpern bekannt. Diese sind zumeist als zusätzlicher Winkel- oder Parallelverbinder ausgebildet und werden mit Schrauben und Nutensteinen in den Profilnuten verklemmt. Der Nachteil dieser Verbindungsart ist, dass hier eine Vielzahl von Kopplungselementen benötigt wird. Außerdem isfdiese Verbindung nach außen hin sichtbar und baut auf dem Profil im Außenbereich auf. Sollen aber weitere Elemente in diesem Bereich der Kopplungsstelle am Profil befestigt werden, ist der Bauraum bereits belegt.

Eine weitere Verbindungsmöglichkeit für eine stirnseitige Verbindung oder eine Winkelverbindung mehrerer Profilteile ist das Einschrauben einer selbstschneidenden Gewindehülse in die Längsnut. Darin wird eine Ankerschraube eingesetzt, die beispielsweise in einen Nutenstein des anderen Profils greift. Ein Nachteil dieser Lösung ist, dass sich beim Einschrauben der Gewindehülse die Längsnut verformen und aufweiten kann. Zudem besteht der Nachteil, dass die Auszugsfestigkeit einer solchen Gewindehülse dann reduziert ist. Zudem besteht als Nachteil die Gefahr eines etwaigen Herausdrehens der Gewindehülse während der Montage der Ankerschraube oder im Gebrauch.

Die Aufgabe der Erfindung ist es, eine Profilkopplungsanordnung für ein Profilteil mit einer Längsnut bereitzustellen, die einfach in der Herstellung und mit wenigen Elementen zu realisieren ist, die universell auch bei verschiedenen Längsnutgeometrien einsetzbar ist, die keinen Bauraum außerhalb der Längsnut des Profilteils beansprucht, und die Kopplung von Profilteilen und Bauteilen oder von Profilteilen untereinander und in unterschiedlichen Winkellagen und Positionen ermöglichen.

Die Aufgabe wird durch eine Profilkopplungsanordnung mit den im Patentanspruch 1 aufgeführten Merkmalen gelöst. Bevorzugte Weiterbildungen ergeben sich aus den Unteransprüchen.

Die erfindungsgemäße Profilkopplungsanordnung ist zum Verbinden eines Bauteils mit einem Profilteil an der Stirnseite des Profilteils ausgebildet. Hierbei weist das Profilteil entlang zumindest einer Längsseite eine Längsnut auf, die von der Stirnseite zugänglich ist. Die Kopplung von Bauteilen an Profilteile ist im Maschinen- und Anlagenbau aber auch im Messebau eine sehr häufig auftretende Problemstellung. Anforderungen, wie eine einfache Verbindung mit hoher Steifigkeit und trotzdem nahezu unsichtbarer Ausbildung, werden an diese Profilkopplungsanordnung gestellt.

Dazu weist die Profilkopplungsanordnung als Bauelemente lediglich das Profilteil, einen Kopplungskörper und einen Zugbolzen auf.

Das Profilteil weist eine Stirnseite und eine Längsseite auf. An der Längsseite weist das Profilteil die Längsnut auf. Die Längsnut kann bevorzugt als eine T-Nut ausgebildet sein. Es ist aber insbesondere auch eine U-förmige Nut oder eine andere Nutengeometrie möglich.

Ferner weist eine Nutwandung der Längsnut eine Ausnehmungskontur auf. Diese kann auch nur Abschnitte der Nutwandung erfassen. Die Ausnehmungskontur weist zudem eine planebene Anlagefläche auf, die auch aus mehreren Abschnitten bestehen kann. Die Anlagefläche ist erfindungsgemäß quer zu einer Hauptlängsachse des Profilteils und somit der Stirnseite gegenüberliegend angeordnet.

Bevorzugt wird die Ausnehmungskontur mit einem scheibenförmigen Stirnfräser erzeugt. Dieser wird dazu senkrecht zur Hautlängsachse des Profilteils von der offenen Längsnutseite mit einem definierten Abstand von der Stirnseite bis zum Nutgrund eingefahren. Der Durchmesser des Stirnscheibenfräsers entspricht vorzugsweise der Längsnutbreite und die Dicke der Frässcheibe entspricht der Dicke des Kopplungskörpers. So wird eine Einfräsung im Profil erzeugt, die die Auskragung der Längsnut durchtrennt und eine weitere Einfräsung im Längsnutgrund erzeugt. Die so erstellte Ausnehmungskontur erzeugt eine Passform, die eine entsprechende Kavität für den Kopplungskörper bildet.

Der erfindungsgemäße Kopplungskörper ist in der Ausnehmungskontur angeordnet. Er weist zudem eine erste und eine zweite Planfläche auf. Die Planflächen sind im Wesentlichen parallel zueinander ausgebildet. Die erste Planfläche ist parallel zu der Anlagefläche der Ausnehmungskontur angeordnet und bildet mit dieser einen Anlagedruckkontakt aus. Weiterhin weist der Kopplungskörper eine Seitenkontur auf. Diese ist korrespondierend zu der Ausnehmungskontur des Profilteils ausgebildet. Zur Aufnahme des Zugbolzens weist der Kopplungskörper zudem eine Bohrung auf. Diese ist senkrecht zu den Planflächen und somit längs zu der Hauptlängsachse des Profilteils angeordnet.

Zur kraft- und formschlüssigen Kopplung aller Teile weist die Profilkopplungsanordnung ferner einen Zugbolzen auf. Dieser weist eine Kopplungskörperverbindung auf und ist ausgebildet, eine axiale Zugkraft zwischen dem Kopplungskörper und dem Bauteil bereitzustellen. Die axiale Zugkraft wird von dem Kopplungskörper über dessen erste Planfläche auf die planebene Anlagefläche und somit auf das Profilteil übertragen.

Somit wird das Bauteil mit dem Profilteil an dessen Stirnseite fest verbunden. Diese Verbindung erreicht vorteilhaft eine hohe Festigkeit, die den üblichen Anforderungen im Maschinen- und Anlagenbau aber auch im Messebau genügt.

Ein wesentlicher Vorteil der erfindungsgemäßen Verbindungslösung ist es, dass der Kraftangriff an der Anlagefläche so gestaltet ist, dass die Anlagefläche optimal quer zur Zugkraft ausgerichtet ist. Es besteht vorteilhaft ein zuverlässiger Formschluss der Kraftübertragung ohne prinzipbedingte seitlich wirkende Kräfte. Damit ist vorteilhaft zugleich ein Aufweiten der Längsnut des Profilteils, wie es bei der Anwendung von Einschraubgewindehülsen bei hohen Belastungen auftreten kann, ausgeschlossen.

Durch die bevorzugt eckige Form des Kopplungskörpers besteht auch in dessen rotatorischem Freiheitsgrad bezogen auf die Drehung um die Hauptlängsachse des Profilteils und zugleich Längsachse des Zugbolzens ein zuverlässiger Formschluss. Somit wird vorteilhaft ein ungewolltes Ausdrehen des Kopplungskörpers verhindert.

Weitere Vorteile sind die geringen Herstellungskosten des Kopplungskörpers aufgrund seiner einfachen Form. Vorzugsweise kann der Kopplungskörper als ein Stanzteil hergestellt werden. Zudem kann vorteilhaft für den Zugbolzen auf ein Normbauteil, insbesondere eine Gewindeschraube zurückgegriffen werden. Vorteilhaft ist auch die geringe Anzahl von Bauelementen.

Zudem besteht ein Vorteil durch die einfache Montage der gesamten Profilkopplungsanordnung. So kann zur Montage der Zugbolzen bereits vor dem Einsetzen des Kopplungskörpers in dem Kopplungskörper vormontiert werden. Letztlich kann dann die Montage der gesamten Profilkopplungsanordnung mit nur wenigen Handgriffen erfolgen.

In einer anderen vorteilhaften Weiterbildung ist die zweite Planfläche des Kopplungskörpers als eine Schraubenkopfauflage eines Zugbolzenkopfes des Zugbolzens ausgebildet. In dieser Ausführung kann als Zugbolzen eine Standardschraube eingesetzt werden, deren Kopf dann auf dem Kopplungskörper aufliegt. Dies erhöht die Wirtschaftlichkeit der gesamten Profilkopplungsanordnung, da neben dem Standardprofilteil lediglich der Kopplungskörper als Fertigungsteil hergestellt werden muss.

In einer anderen vorteilhaften Weiterbildung weist die Bohrung des Kopplungskörpers ein Bohrungsinnengewinde auf. Das Bohrungsinnengewinde ist hierbei ausgebildet, ein Zugbolzenaußengewinde des Zugbolzens aufzunehmen. Dabei können diese Profilteile fertigungstechnisch mit der gleichen Ausnehmungskontur vorbereitet werden wie in der vorherigen Weiterbildung.

In dieser Weiterbildung kann der Zugbolzen ebenfalls als eine Standardschraube ausgebildet sein. Die Schraube wird in diesem Fall von der Stirnseite in das Innengewinde des Kopplungskörpers eingeschraubt und hält mit ihrem Schraubenkopf das zu befestigende Bauteil. Besonders vorteilhaft ist dies bei einer stirnseitigen Längsverbindung des Profilteils mit flachen Bauteilen mit einer Durchgangsbohrung. Der Zugbolzen kann in einem solchen Bauteil durch eine Durchgangsbohrung und in den Kopplungskörper mit Bohrungsinnengewinde im Profilteil, eingeschraubt werden. Diese Weiterbildung ist zudem immer dann besonders vorteilhaft, wenn ein geringer Bauraum hinter der Ausnehmungskontur besteht und ein rückseitiger Montage- oder Werkzeugzugang erschwert oder unmöglich ist.

In einer anderen vorteilhaften Weiterbildung ist die Längsnut des Profilteils als T-Nut ausgebildet. Hierbei weist die Nutenwandung Hinterschneidungsabschnitte auf. Die Ausnehmungskontur ist so gestaltet, dass diese nur in den Hinterschneidungsabschnitten und in einem Nutengrundabschnitt angeordnet ist. So wird der Kopplungskörper an drei Punkten mit seiner ersten Planfläche aufgenommen.

Dadurch ist der Kopplungskörper vorteilhaft statisch optimiert im Profilteil aufgenommen. Ein Verkippen wird somit ausgeschlossen.

Zudem bleiben vorteilhaft die übrigen Abschnitte der Nutwandung intakt und gewährleisten eine ungeschwächte Festigkeit des Profilteils.

In einer anderen vorteilhaften Weiterbildung weist der Kopplungskörper einen nutenöffnungseitigen Einzug auf. Als nutenöffnungsseitiger Einzug ist zu verstehen, dass der Kopplungskörper an der Nutenöffnung einen konkaven Abschnitt aufweist und so die Nutenöffnung freibleibt.

Diese Weiterbildung hat den Vorteil des verdeckten Einbaus der Profilkopplungsverbindung. So kann die Längsnut des Profilteils auch durch ein einliegendes Abdeckungsprofil verschlossen werden. Aber auch die Nutzung von Flächenprofilen oder anderen Bauteilen bleibt so erhalten.

In einer anderen vorteilhaften Weiterbildung ist das Profilteil als ein weiteres Profilteil ausgebildet. Die Verbindung mehrerer Profilteile ist ebenso möglich. So können Tragwerke, ganze Maschinen oder Prototypen, Testanordnungen etc. einfach und kostengünstig auf- und umgebaut werden.

In einer anderen, fortführenden vorteilhaften Weiterbildung zu der vorherigen Weiterbildung weist das weitere Profilteil eine weitere Stirnseite, eine weitere Ausnehmungskontur, die wie die Ausnehmungskontur der vorhergehenden Varianten ausgebildet ist und einen weiteren Kopplungskörper, der wie der Kopplungskörper der vorhergehenden Varianten ausgebildet ist, auf.

Die Weiterbildung ist insbesondere dadurch gekennzeichnet, dass das Profilteil und das weitere Profilteil fluchtend zueinander angeordnet sind und die Stirnseite und die weitere Stirnseite in einem Druckkontakt zueinanderstehen. Hierbei ist der Zugbolzen ausgebildet, eine axiale Zugkraft zwischen dem Kopplungskörper und dem weiteren Kopplungskörper bereitzustellen. Beide Profilteile werden stirnseitig gegeneinander gezogen.

Hierbei wird ein Kopplungskörper mit einer Durchgangsbohrung in das erste Profilteil eingesetzt und ein weiterer mit einem Bohrungsinnengewinde in das zweite Profilteil. So kann als Zugbolzen wieder eine Standardschraube verwendet werden. Auch Vorbereitung der Montage beider Profilteile kann auf gleiche Weise erfolgen. Es muss lediglich in beide Profilteile in deren Füge-Endbereichen die gleiche Ausnehmungskontur eingebracht werden. Nach dem Fügen aller Teile der Profilkopplungsanordnung ist eine exakte Längsverbindung der Profilteile in Form einer Verlängerung erzeugt. Durch den verdeckten Einbau ist die Verlängerung der Profilteile aufgrund der Exaktheit der Fügeausbildung optisch zudem kaum wahrnehmbar.

Vorteilhaft können Profilteile mit mehreren nebeneinander angeordneten Längsnuten in besonders stabiler Weise gekoppelt werden, indem in jeder Längsnut eine Ausnehmungskontur und eine Kopplungskörper mit jeweils einem Zugbolzen angeordnet sind.

In einer anderen vorteilhaften Weiterbildung gemäß Anspruch 7 weisen die Stirnseiten der Profilteile einen spitzen Winkel zu der Hauptlängsachse auf. Diese Variante beschreibt die Verlängerung eines Profils in Längsrichtung. Allerdings haben die Profile einen schrägen Stoß zueinander. Durch die Anordnung über einen schrägen Stoß kann die Biege- und Torsionsfestigkeit insbesondere auch bei flächigen Profilteilen erhöht werden.

In einer anderen fortführenden vorteilhaften Weiterbildung ist das weitere Profilteil quer zu dem Profilteil angeordnet und weist eine weitere Längsseite auf. Die Stirnseite des Profilteils steht in einem Druckkontakt zu der weiteren Längsseite des weiteren Profilteils. Dem weiteren Profilteil ist ein Gegenlager zugeordnet. Das Gegenlager ist vorzugsweise in Form eines T-Nutensteins ausgeführt. Zudem ist der Zugbolzen ausgebildet, eine axiale Zugkraft zwischen dem Kopplungskörper und dem Gegenlager bereitzustellen.

Die Ausführungsform dieser Variante ist entweder als T-Anordnung der Profilteile, oder bei einer Anordnung an einem Profilende des weiteren Profilteils als L-Anordnung ausgebildet.

In beiden Anordnungen wird das erste Profilteil mit der Stirnseite stumpf auf das weitere Profil an der Seite der Längsnutöffnung gestoßen. Der Kopplungskörper wird im ersten Profil und der T-Nutenstein in der Längsnut des weiteren Profils eingebracht. Der Zugbolzen in Form einer Schraube verspannt die Profile in der Hauptlängsachse des ersten Profilteils formschlüssig und in der Hauptlängsachse des weiteren Profilteils kraftschlüssig zueinander.

Gemäß dieser Weiterbildung können beispielsweise Zwischenstreben zwischen parallelen Profilteilen ausgeführt werden, ohne diese demontieren zu müssen.

In einer anderen fortführenden vorteilhaften Weiterbildung ist das weitere Profilteil quer zu dem Profilteil angeordnet und die Stirnseite des Profilteils steht in einem Druckkontakt zu der weiteren Stirnseite des weiteren Profils. Zudem weisen beide Stirnseiten eine Gehrung auf. Dem weiteren Profilteil ist ein Gegenlager zugeordnet. Das Gegenlager ist in der Regel als T-Nutenstein ausgeführt. Der Zugbolzen ist ausgebildet, eine axiale Zugkraft zwischen dem Kopplungskörper und dem Gegenlager bereitzustellen. Diese Anordnung stellt eine L-Verbindung bereit.

So werden die Profile an deren Enden auf Gehrung entsprechend des halben Winkels des Fügewinkels geschnitten. In den meisten Anwendungen beträgt der Fügewinkel der beiden Profile 90° und der Gehrungswinkel 45°. Danach werden die Profile im Fügewinkel gefügt. Eine solche Eckverbindung kommt vielfach für verschiedene technische Aufbauten zum Einsatz. Insbesondere werden Rahmenteile für Gestelle von Versuchsaufbauten oder Maschinen und Anlagen in Form von Tragwerken aus Rahmenkonstruktionen aufgebaut.

Die Erfindung wird als Ausführungsbeispiel anhand von
- Fig. 1: Schrägbildansicht einer T-förmigen Profilkopplungsanordnung
- Fig. 2: Schrägbildansicht des Kopplungskörpers
- Fig. 3: Schrägbildansicht einer T-förmigen Profilkopplungsanordnung in Explosionsansicht
- Fig. 4: Schrägbildansicht einer längserstreckten Profilkopplungsanordnung
- Fig. 5: Schrägbildansicht einer längserstreckten Profilkopplungsanordnung in Explosionsansicht
- Fig. 6: Schrägbildansicht einer T-förmigen und um 90 Grad versetzten Profilkopplungsanordnung
- Fig. 7: Schrägbildansicht einer einer T-förmigen und um 90 Grad versetzten Profilkopplungsanordnung in Explosionsansicht
- Fig. 8: Schrägbildansicht einer gewinkelten Profilkopplungsanordnung
- Fig. 9: Schrägbildansicht einer gewinkelten Profilkopplungsanordnung in Explosionsansicht
- Fig. 10: Schrägbildansicht einer gewinkelten Profilkopplungsanordnung mit zur Seite geöffneter Längsnut
- Fig. 11: Schrägbildansicht einer gewinkelten Profilkopplungsanordnung mit zur Seite geöffneter Längsnut in Explosionsansicht
- Fig. 12: Schrägbildansicht einer T-förmigen Profilkopplungsanordnung in 45 Grad Anordnung
- Fig. 13: Schrägbildansicht einer T-förmigen Profilkopplungsanordnung in 45 Grad Anordnung in Explosionsansicht
näher erläutert.

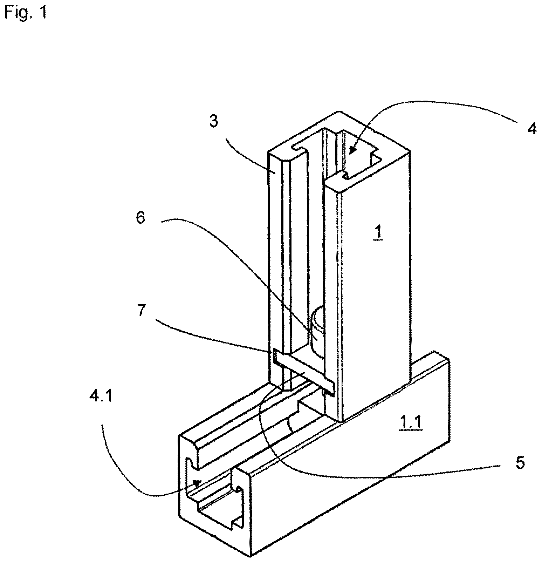

Die Figur 1 zeigt in einer Schrägbildansicht die Profilkopplungsanordnung. Die Anordnung entspricht der stumpf gestoßenen Variante als T-Form. In das Profilteil 1 ist die Ausnehmungskontur 7 eingearbeitet. Darin eingesetzt befindet sich der Kopplungskörper 5. Das Profilteil 1 ist an ein weiteres Profilteil 1.1 an der offenen Seite der Längsnut 4 senkrecht angelegt. In dem weiteren Profilteil 1.1 ist in der weiteren Längsnut 4.1 ein T-Nutenstein 14 eingesetzt. Die gesamte Profilkopplungsanordnung wird mittels des Zugbolzens 6 verspannt.

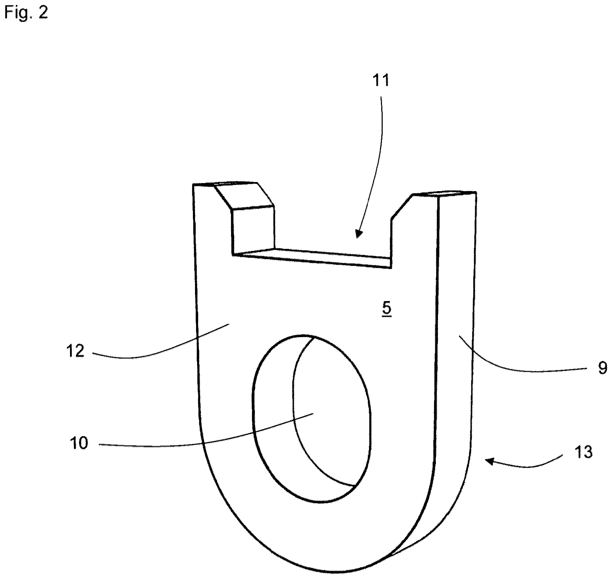

Die Figur 2 zeigt in einer Schrägbildansicht den Kopplungskörper 5. Dieser wird ausgebildet durch eine erste Planfläche 12 und eine zweite Planfläche 13. Die zweite Planfläche 13 ist parallel zu der ersten Planfläche 12 rückseitig angeordnet. Senkrecht dazu bildet die Seitenkontur 9 den Körperabschluss. Im Zentrum und zugleich senkrecht zu der Anlagefläche 8 durchläuft die Bohrung 10 den Kopplungskörper 5. Ein Abschnitt der Seitenkontur 9 ist abgerundet und an der gegenüberliegenden Seite ist der Einzug 11 eingebracht.

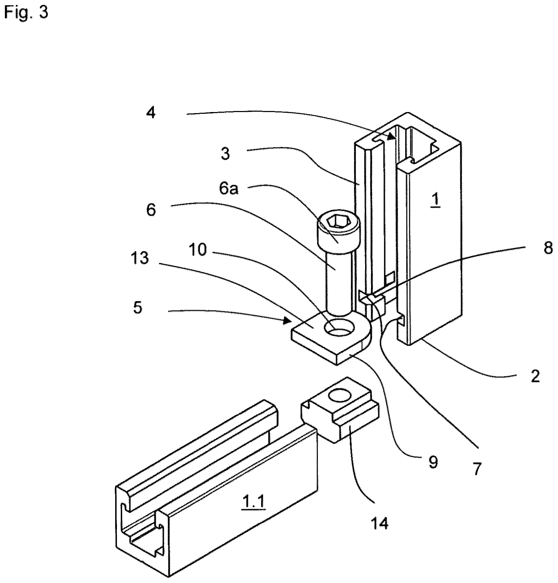

Figur 3 zeigt das Ausführungsbeispiel gemäß Fig. 1 in einer Explosionsdarstellung und lässt Einzelheiten besser erkennen. Der Zugbolzen 6 mit Zugbolzenkopf 6a ist gemäß der Fig. 3 noch nicht in die Bohrung 10 des Kopplungskörpers 5 eingesetzt. Die obere Seite des Kopplungskörpers 5 ist hier die zweite Planfläche 13. Zudem ist in Fig. 3 die Anlagefläche 8 der Ausnehmungskontur 7 dargestellt, welche in einer Montageendlage in einem Druckkontakt zu der hier unten liegenden und nicht sichtbaren ersten Planfläche 12 (vgl. Fig. 2) steht.

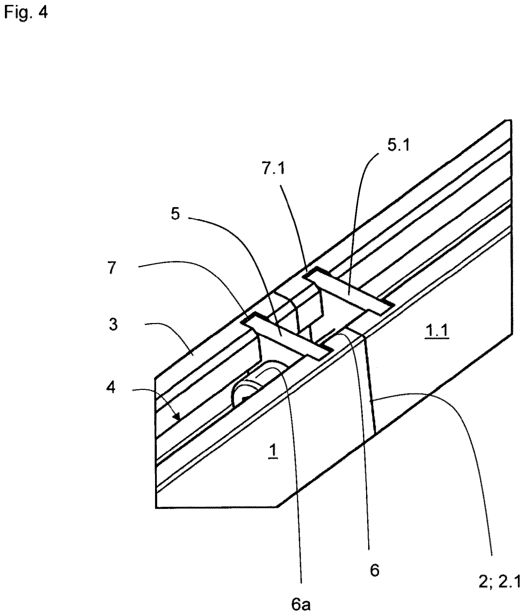

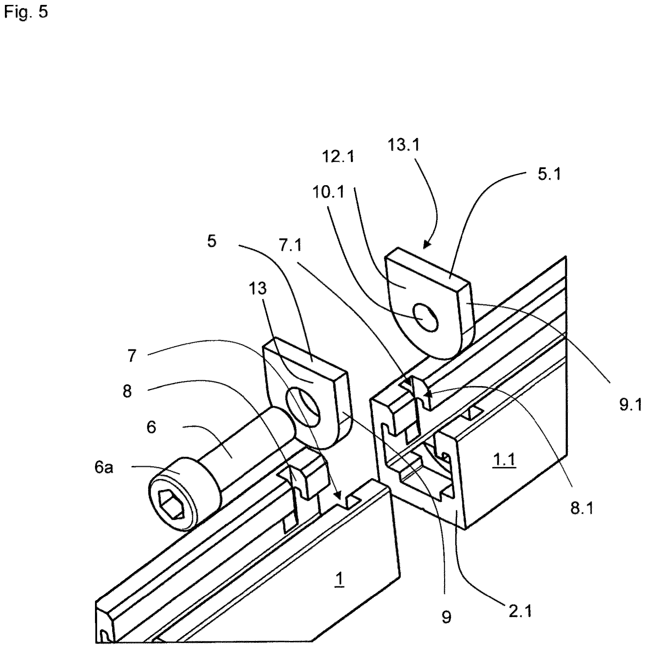

Figur 4 und Figur 5 zeigen in verschiedenen Ansichten ein weiteres Ausführungsbeispiel und werden daher zusammen erläutert.

In dem Ausführungsbeispiel gem. Fig. 4 und 5 sind das Profilteil 1 und das weitere Profilteil 1.1 mit deren Stirnseiten gegeneinander gestoßen, so dass sich die Stirnseite 2 des Profilteils und die weitere Stirnseite 2.1 des weiteren Profilteils antiparallel gegenüberliegen und in einer Montageendlage in einem Druckkontakt stehen. Das weitere Profilteil 1.1 ist in gleicher Weise wie das Profilteil 1 ausgebildet und weist insbesondere die weitere Ausnehmungskontur 7.1 mit der weiteren Anlagefläche 8.1 auf. Der weitere Kopplungskörper 5.1 ist in der weiteren Ausnehmungskontur 7.1 angeordnet und nach seinem Grundaufbau in gleicher Weise wie der Kopplungskörper 5 ausgebildet. Hierzu weist der weitere Kopplungskörper 5.1 insbesondere die weitere erste Planfläche 12.1, die weitere zweite Planfläche 13.1, die weitere Seitenkontur 9.1 und die weitere Bohrung 10.1 auf.

Während die Bohrung 10 des Kopplungskörpers 5 als Durchgangsbohrung ausgebildet ist, weist die weitere Bohrung 10.1 des weiteren Kopplungskörpers 5.1 ein Innengewinde auf, so dass der Zugbolzen 6 mit einem Außengewindeabschnitt in die weitere Bohrung 10.1 eingreift, mit seinem Zugbolzenkopf 6a auf der zweiten Planfläche des Kopplungskörpers 5 aufliegt und so die beiden Kopplungskörper 5, 5.1 axial gegeneinander verspannt. Die beiden Profilteile 1, 1.1 werden auf diese Weise fluchtend zueinander ausgerichtet und in einer gemeinsamen Hauptlängsachse angeordnet. Vorteilhaft kann in diesem Ausführungsbeispiel eine Vorgruppe aus dem Kopplungskörper 5, dem Zugbolzen 6 und dem weiteren Kopplungskörper 5.1 vormontiert und diese dann in die Ausnehmungskonturen 7, 7.1 quer zur Hauptlängsachse an der Längsseite eingesetzt und so die Montage vereinfacht werden.

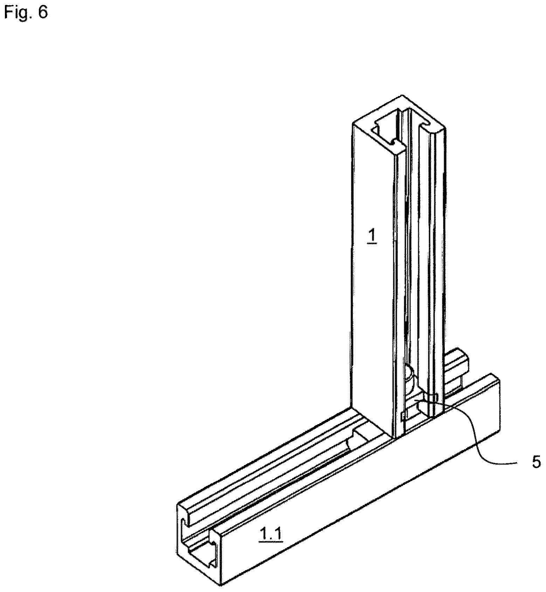

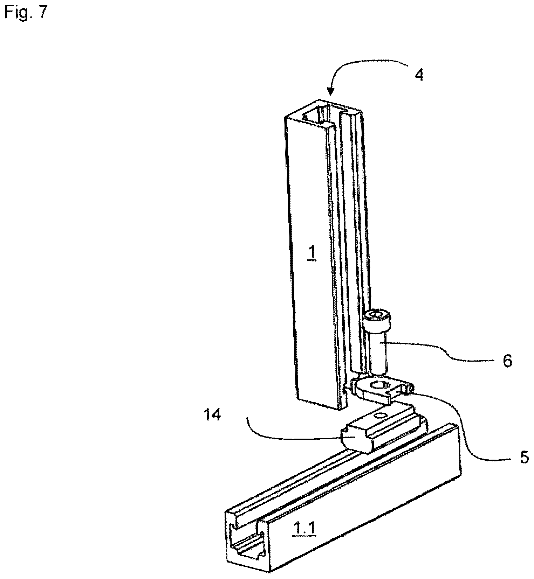

Figur 6 und Figur 7 zeigen in verschiedenen Ansichten ein weiteres Ausführungsbeispiel, bei dem das Profilteil 1 um 90 Grad um seine Hauptlängsachse verdreht angeordnet ist. Die Längsnut 4 des Profilteils 1 öffnet sich in diesem Ausführungsbeispiel zur selben Seite wie eine Seitenwandung des weiteren Profilteils.

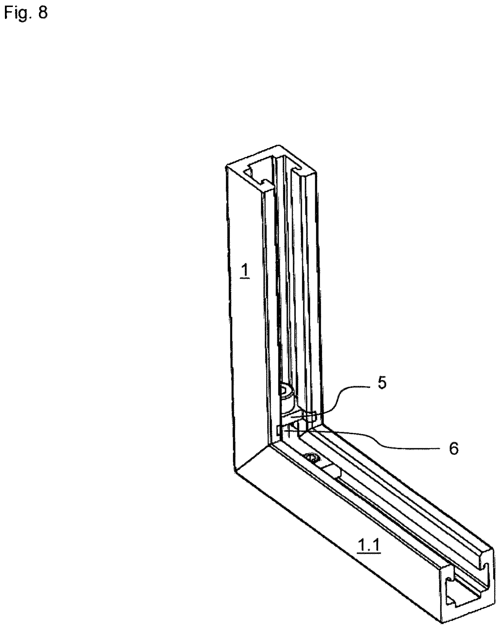

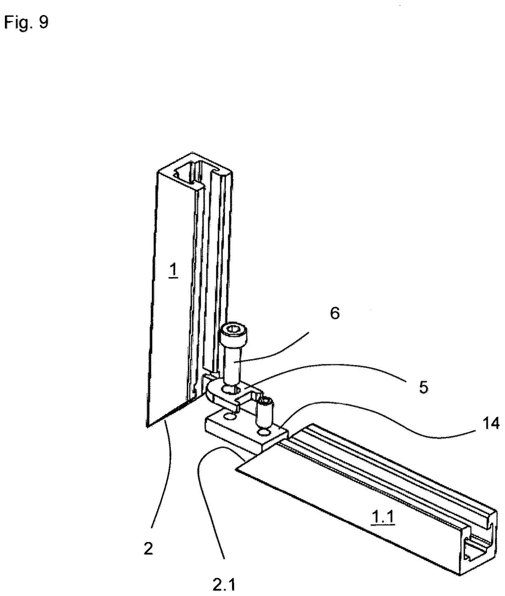

Figur 8 und Figur 9 zeigen in verschiedenen Ansichten ein weiteres Ausführungsbeispiel, bei dem das Profilteil 1 und das weitere Profilteil 1.1 an einem Ende gekoppelt sind. Beide Profilteile 1, 1.1 weisen einen stirnseitigen Gehrungsschnitt auf, so dass die Stirnseiten 2. 2.1 in einem Winkel von 45 Grad zu der jeweiligen Hauptlängsachse angeordnet sind.

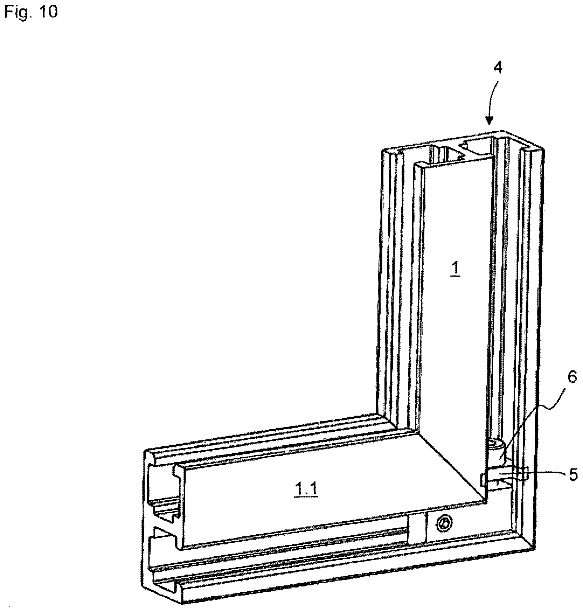

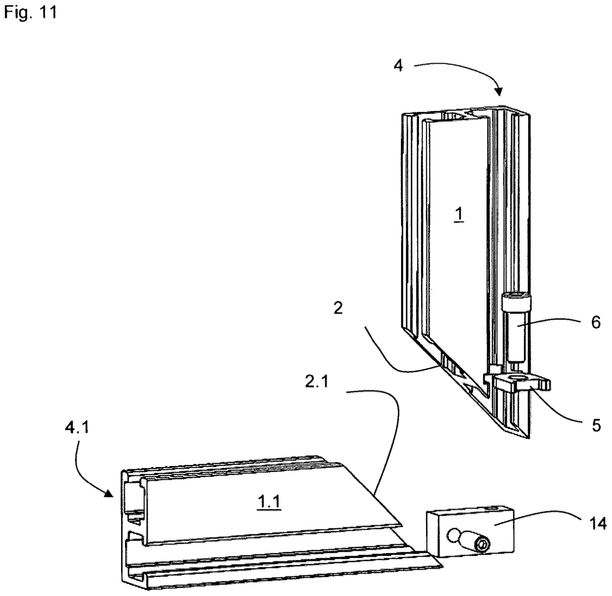

Figur 10 und Figur 11 zeigen in verschiedenen Ansichten ein weiteres Ausführungsbeispiel, bei dem wie in dem Ausführungsbeispiel nach den Fig. 8, 9 das Profilteil 1 und das weitere Profilteil 1.1 an einem Ende gekoppelt sind und jeweils eine Gehrungsschnitt aufweisen, durch den die Stirnseiten 2, 2.1 einen Winkel von 45 Grad zu der Hauptlängsachse aufweisen und in einer Montageendlage in einem Druckkontakt aufeinander liegen. Der Druckkontakt wird bereitgestellt, indem der Zugbolzen 6 in einen Nutenstein 14 als Gegenlager eingreift, der in der weiteren Längsnut des weiteren Profilteils angeordnet ist. Der Nutenstein 14 ist mit einer Madenschraube (ohne Bezugszeichen) durch Verklemmung gegen den Nutengrund gegen axiale Verschiebung gesichert, da durch 45 Grad geneigten Stirnseiten 2, 2.1 bei einem Anziehen des Zugbolzens eine axiale Kraft auf den Nutenstein in Richtung der weiteren Stirnseite 2.1 wirkt. Im Unterschied zu dem Ausführungsbeispiel gemäß Fig. 8, 9 sind die Längsnuten 4, 4.1 nach der Seite geöffnet.

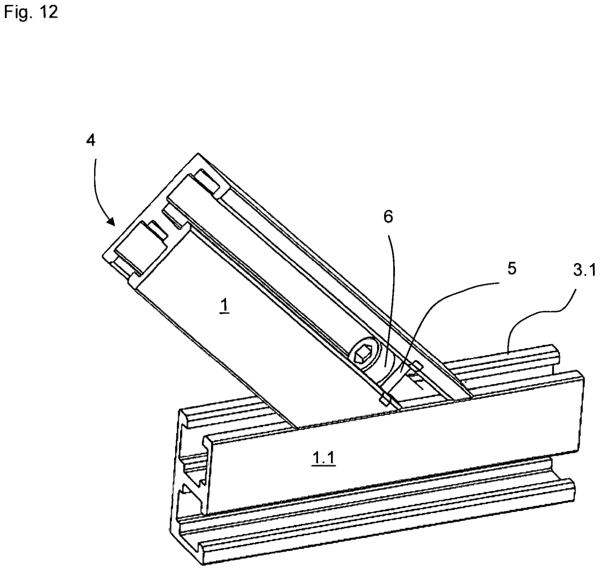

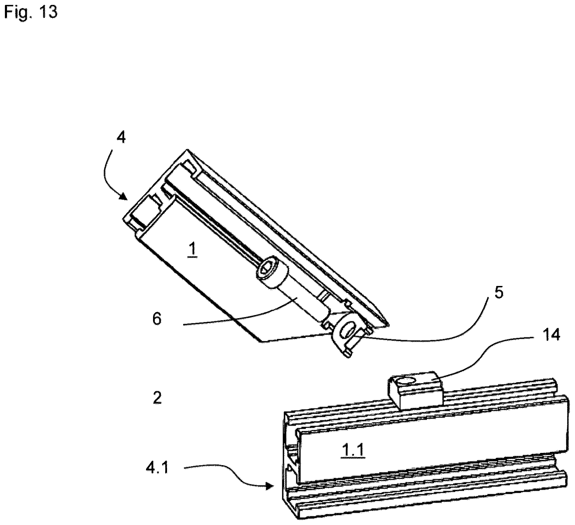

Letztlich zeigen Figur 12 und 13 in verschiedenen Ansichten ein weiteres Ausführungsbeispiel, bei dem das weitere Profilteil 1 in einem Winkel von 45 Grad mit einer in 45 Grad angeordneten Stirnseite 2 auf die weitere Längsseite 3.1 des weiteren Profilteils 1.1 in einem Druckkontakt stößt. Auch hier greift der Zugbolzen 6 in einen Nutenstein 14 ein, der in der weiteren Längsnut 4.1 des weiteren Profilteils 1.1 angeordnet ist. Hierzu weist der Nutenstein 14 eine Innengewindebohrung auf, deren Achse um 45 Grad geneigt ist, so dass die Bohrungsachse und die Längsachse des Zugbolzens 6 fluchten.

Im Übrigen gelten die Beschreibungsabschnitte zu Fig. 1 und Fig. 3 in entsprechender Weise auch für die Fig. 6 bis Fig. 13.

### Verwendete Bezugszeichen

- 1: Profilteil
- 1.1: weiteres Profilteil
- 2: Stirnseite
- 2.1: weitere Stirnseite
- 3: Längsseite
- 3.1: weitere Längsseite
- 4: Längsnut
- 4.1: weitere Längsnut
- 5: Kopplungskörper
- 5.1: weiterer Kopplungskörper
- 6: Zugbolzen
- 6a: Zugbolzenkopf
- 7: Ausnehmungskontur
- 7.1: weitere Ausnehmungskontur
- 8: Anlagefläche
- 8.1: weitere Anlagefläche
- 9: Seitenkontur
- 9.1: weitere Seitenkontur
- 10: Bohrung
- 10.1: weitere Bohrung
- 11: Einzug
- 12: erste Planfläche
- 12.: weitere erste Planfläche
- 13: zweite Planfläche
- 13.1: weitere zweite Planfläche
- 14: Nutenstein

## Patentansprüche

1. Profilkopplungsanordnung,
ausgebildet zum Verbinden eines Bauteils (14) mit einem Profilteil (1) an einer Stirnseite (2) des Profilteils (1),
wobei das Profilteil (1) entlang zumindest einer Längsseite (3) eine Längsnut (4) aufweist, die von der Stirnseite (2) zugänglich ist,
aufweisend das Profilteil (1), einen Kopplungskörper (5) und einen Zugbolzen (6),
wobei das Profilteil (1) die Stirnseite (2) und die Längsseite (3) und eine Längsnut (4), die an der Längsseite (3) angeordnet ist, aufweist, wobei eine Nutwandung der Längsnut (4) eine Ausnehmungskontur (7) aufweist, wobei die Ausnehmungskontur (7) eine planebene Anlagefläche (8) aufweist und die Anlagefläche (8) quer zu einer Hauptlängsachse des Profilteils (1) und der Stirnseite (2) gegenüberliegend angeordnet ist,
wobei der Kopplungskörper (5) in der Ausnehmungskontur (7) angeordnet ist und eine erste Planfläche (12) und eine zweite Planfläche (13), eine Seitenkontur (9) und eine Bohrung (10) aufweist, wobei die Planflächen (12, 13) im Wesentlichen parallel zueinander ausgebildet sind und wobei die erste Planfläche (12) parallel zu der Anlagefläche (8) der Ausnehmungskontur (7) angeordnet ist und mit dieser einen Anlagedruckkontakt ausbildet, wobei die Seitenkontur (9) korrespondierend zu der Ausnehmungskontur (7) ausgebildet ist, wobei die Bohrung (10) senkrecht zu den Planflächen und längs zu der Hauptlängsachse des Profilteils (1) angeordnet ist,
wobei der Zugbolzen (6) eine Kopplungsverbindung aufweist und ausgebildet ist, eine axiale Zugkraft zwischen dem Kopplungskörper (5) und dem Bauteil bereitzustellen.

2. Profilkopplungsanordnung nach Anspruch 1,
**dadurch gekennzeichnet,**
**dass** die zweite Planfläche als eine Schraubenkopfauflage eines Zugbolzenkopfs (6a) ausgebildet ist.

3. Profilkopplungsanordnung nach Anspruch 1 und 2,
**dadurch gekennzeichnet,**
**dass** die Bohrung (10) ein Bohrungsinnengewinde aufweist, wobei das Bohrungsinnengewinde ausgebildet ist, ein Zugbolzenaußengewinde des Zugbolzens (6) aufzunehmen.

4. Profilkopplungsanordnung nach einem der vorhergehenden Ansprüche,
**dadurch gekennzeichnet,**
**dass** die Längsnut (4) als T-Nut ausgebildet ist, wobei die Nutwandung Hinterschneidungsabschnitte aufweist und
wobei die Ausnehmungskontur (7) ausschließlich in den Hinterschneidungsabschnitten und in einem Nutengrundabschnitt angeordnet ist.

5. Profilkopplungsanordnung nach einem der vorhergehenden Ansprüche,
**dadurch gekennzeichnet,**
**dass** der Kopplungskörper (5) einen nutenöffnungsseitigen Einzug (11) aufweist.

6. Profilkopplungsanordnung nach einem der vorhergehenden Ansprüche,
**dadurch gekennzeichnet,**
**dass** das Bauteil als weiteres Profilteil (1.1) ausgebildet ist.

7. Profilkopplungsanordnung gemäß dem vorhergehenden Anspruch,
**dadurch gekennzeichnet,**
**dass** das weitere Profilteil (14) eine weitere Stirnseite (2.1), eine weitere Ausnehmungskontur (7.1), die ausgebildet ist wie die Ausnehmungskontur (7), und einen weiteren Kopplungskörper (5.1), der ausgebildet wie der Kopplungskörper (5), aufweist,
wobei das Profilteil (1) und das weitere Profilteil (1.1) fluchtend zueinander angeordnet sind und die Stirnseite (2) und die weitere Stirnseite (2.1) in einem Druckkontakt stehen und
wobei der Zugbolzen (6) ausgebildet ist, eine axiale Zugkraft zwischen dem Kopplungskörper (5) und dem weiteren Kopplungskörper (5.1) bereitzustellen.

8. Profilkopplungsanordnung gemäß dem vorhergehenden Anspruch,
**dadurch gekennzeichnet,**
**dass** die Stirnseiten (2, 2.1) einen spitzen Winkel zu der Hauptlängsachse aufweisen.

9. Profilkopplungsanordnung gemäß dem Anspruch 6,
**dadurch gekennzeichnet,**
**dass** das weitere Profilteil (1.1) quer zu dem Profilteil (1) angeordnet ist und die Stirnseite (2) des Profilteils (1) in einem Druckkontakt zu einer weiteren Längsseite (3.1) des weiteren Profilteils (1.1) steht, wobei dem weiteren Profilteil (1.1) ein Gegenlager zugeordnet ist und wobei der Zugbolzen (6) ausgebildet ist, eine axiale Zugkraft zwischen dem Kopplungskörper (5) und dem Gegenlager bereitzustellen.

10. Profilkopplungsanordnung gemäß dem Anspruch 6,
**dadurch gekennzeichnet,**
**dass** das weitere Profilteil (1.1) quer zu dem Profilteil (1) angeordnet ist und die Stirnseite (2) des Profilteils (1) in einem Druckkontakt zu der weiteren Stirnseite (2.1) des weiteren Profilteils (1) steht, wobei beide Stirnseiten (2, 2.1) eine Gehrung aufweisen, wobei dem weiteren Profilteil (1.1) ein Gegenlager zugeordnet ist und wobei der Zugbolzen (6) ausgebildet ist, eine axiale Zugkraft zwischen dem Kopplungskörper (5) und dem Gegenlager bereitzustellen

## Claims

1. Profile coupling arrangement,
designed for connecting a component (14) to a profiled part (1) at an end face (2) of the profiled part (1), wherein the profile part (1) has a longitudinal groove (4) along at least one longitudinal side (3), which is accessible from the end face (2),
comprising the profile part (1), a coupling body (5) and a tension bolt (6),
wherein the profile part (1) has the end face (2) and the longitudinal side (3) and a longitudinal groove (4), which is arranged on the longitudinal side (3), wherein a groove wall of the longitudinal groove (4) has a recess contour (7), wherein the recess contour (7) has a plane contact surface (8) and the contact surface (8) is arranged transversely to a main longitudinal axis of the profile part (1) and opposite the end face (2),
wherein the coupling body (5) is arranged in the recess contour (7) and has a first plane surface (12) and a second plane surface (13), a side contour (9) and a hole (10), wherein the plane surfaces (12, 13) are formed substantially parallel to one another and wherein the first plane surface (12) is arranged parallel to the contact surface (8) of the recess contour (7) and forms a pressure contact therewith, wherein the side contour (9) is formed corresponding to the recess contour (7), wherein the bore (10) is arranged perpendicular to the plane surfaces and longitudinally to the main longitudinal axis of the profile part (1),
wherein the tension bolt (6) has a coupling connection and is designed to provide an axial tension force between the coupling body (5) and the component.

2. Profile coupling arrangement according to claim 1,
is **characterised in that**,
that the second flat surface is designed as a screw head support of a tension bolt head (6a).

3. Profile coupling arrangement according to claims 1 and 2,
are **characterised in that**,
the hole (10) has an internal thread, the internal threaded hole being designed to receive an external tension bolt thread of the tension bolt (6).

4. Profile coupling arrangement according to one of the preceding claims,
is **characterised in that**,
the longitudinal groove (4) is designed as a T-Slot, the groove wall having undercut sections, and
wherein the recess contour (7) is arranged exclusively in the undercut sections and in a groove base section.

5. Profile coupling arrangement according to one of the preceding claims,
is **characterised in that**,
the coupling body (5) has an indentation (11) on the groove opening side.

6. Profile coupling arrangement according to one of the preceding claims,
is **characterised in that**,
the component is designed as a further profile part (1.1).

7. Profile coupling arrangement according to the preceding claim,
is **characterised in that**,
the further profile part (14) has a further end face (2.1), a further recess contour (7.1), which is designed like the recess contour (7), and a further coupling body (5.1), which is designed like the coupling body (5),
wherein the profiled part (1) and the further profiled part (1.1) are arranged in alignment with one another and the end face (2) and the further end face (2.1) are in pressure contact, and
wherein the tension bolt (6) is designed to provide an axial tension force between the coupling body (5) and the further coupling body (5.1).

8. Profile coupling arrangement according to the preceding claim,
is **characterised,**
**in that** the end faces (2, 2.1) have an acute angle to the main longitudinal axis.

9. Profile coupling arrangement according to claim 6,
is **characterised in that**,
the further profile part (1.1) is arranged transversely to the profile part (1) and the end face (2) of the profile part (1) is in pressure contact with a further longitudinal side (3.1) of the further profile part (1.1), wherein a counter-face is associated with the further profile part (1.1) and wherein the tension bolt (6) is designed to provide an axial tension force between the coupling body (5) and the counter-face.

10. Profile coupling arrangement according to claim 6,
is **characterised in that**,
the further profile part (1.1) is arranged transversely to the profile part (1) and the end face (2) of the profile part (1) is in pressure contact with the further end face (2.1) of the further profile part (1), wherein both end faces (2, 2.1) have a mitre, wherein the further profile part (1.1) is assigned a counter-bearing and wherein the tension bolt (6) is designed to provide an axial tensile force between the coupling body (5) and the counter-face.

## Revendications

1. arrangement de couplage de profil,
conçu pour relier un composant (14) à unepièce profilée (1) au niveau d'une face d'extrémité (2) de la pièce profilée (1), dans lequel la pièce profilée (1) présente une rainure longitudinale (4) le long d'au moins un côté longitudinal (3), qui est accessible depuis la face d'extrémité (2),
comprenant la partie profilée (1), un corps d'accouplement (5) et un boulon de tension (6),
dans lequel la partie profilée (1) a la face d'extrémité (2) et le côté longitudinal (3) et une rainure longitudinale (4) qui est disposée sur le côté longitudinal (3), dans lequel un mur de rainure de la rainure longitudinale (4) a un contour de relief (7), dans lequel le contour de relief (7) a une surface de contact plane (8) et la surface de contact (8) est disposée transversalement à un axe longitudinal principal de la partie profilée (1) et en face de la face d'extrémité (2),
dans lequel le corps d'accouplement (5) est disposé dans le contour de la cavité (7) et possède une première surface plane (12) et une deuxième surface plane (13), un contour latéral (9) et un trou (10), dans lequel les surfaces planes (12, 13) sont formées sensiblement parallèlement l'une à l'autre et dans lequel la première surface plane (12) est disposée parallèlement à la surface de contact (8) du contour de la cavité (7) et forme un contact par pression avec celle-ci, dans lequel le contour latéral (9) est formé en correspondance avec le contour de retrait (7), dans lequel l'orifice (10) est disposé perpendiculairement aux surfaces planes et longitudinalement à l'axe longitudinal principal de la partie profilée (1),
dans lequel le boulon de tension (6) a une connexion d'accouplement et est conçu pour fournir une force de tension axiale entre le corps d'accouplement (5) et le composant.

2. arrangement d'accouplement de profilés selon la revendication 1,
est caractérisé en cela, que la deuxième surface planeest conçue comme un support de tête de vis d'une tête de boulon de tension (6a).

3. arrangement d'accouplement de profilés selon les revendications 1 et 2,
est caractérisé en cela,
le trou (10) a une vis interne, le trou taraudé interne étant conçu pour recevoir une vis de tension externe du boulon de tension (6).

4. profil arrangement d'accouplement selon l'une des revendications
précédentes, caractérisé encela, la rainure longitudinale (4) est conçue comme une rainure en T, la paroi de la rainure ayant des sections en contre-dépouille, et
dans lequel le contour de relief (7) est disposé exclusivement dans les sections de contre-dépouille et dans une section de base de rainure.

5. profil arrangement d'accouplement selon l'une des revendications précédentes, caractérisé encela, le corps d'accouplement (5) comporte une indentation (11) sur lecôté d'ouverture de la rainure.

6. Dispositif d'accouplement de profilés selon l'une des revendications précédentes, caractérisé encela, le composant est conçu comme une autre pièce profilée (1.1).

7. Dispositif d'accouplement de profilés selon la revendication précédente,
caractérisé en cela,
la partie profilée supplémentaire (14) a une face d'extrémité supplémentaire (2.1), un contour de rehaussement supplémentaire (7.1), qui est conçu comme le contour de rehaussement (7), et un corps d'accouplement supplémentaire (5.1), qui est conçu comme le corps d'accouplement (5),
dans lequel la partie profilée (1) et la partie profilée supplémentaire (1.1) sont disposées en alignement l'une avec l'autre et la face d'extrémité (2) et la face d'extrémité supplémentaire (2.1) sont en contact sous pression, et dans lequel le boulon de tension (6) est conçu pour fournir une force de tension axiale entre le corps d'accouplement (5) et le corps d'accouplement supplémentaire (5.1).

8. arrangement d'accouplement profilé selon la revendication précédente, est caractérisée, dans le fait que les faces d'extrémité (2, 2.1) ont un angle aigu par rapport à l'axe longitudinal principal.

9. arrangement d'accouplement de profilés selon la revendication 6, caractérisé en cela, la partie profilée supplémentaire (1.1) est disposée transversalement à la partie profilée (1) et la face d'extrémité (2) de la partie profilée (1) est en contact sous pression avec un autre côté longitudinal (3.1) de lapartie profilée supplémentaire (1.1), dans lequel un contre-appui est associé à la partie profilée supplémentaire (1.1) et dans lequel le boulon de tension (6) est conçu pour fournir une force de tension axiale entre le corps d'accouplement (5) et le contre-appui.

10. arrangement d'accouplement de profilé selon la revendication 6,
caractérisé en cela,
la partie profilée supplémentaire (1.1) est disposée transversalementà la partie profilée (1) et la face d'extrémité (2) de la partie profilée (1) est en contact sous pression avec la face d'extrémité supplémentaire (2.1) de la partie profilée supplémentaire (1), les deux faces d'extrémité (2, 2.1) ayant un mitre, la partie profilée supplémentaire (1.1) étant associée à un contre-support et le boulon de tension (6) étant conçu pour fournir une force de tension axiale entre le corps d'accouplement (5) et le contre-support
